# EUROPEAN PATENT APPLICATION

(11) **EP 2 704 248 A1**
(43) Date of publication of application: **05.03.2014**
(21) Application number: 11864507.6
(22) Date of filing: 31.12.2011
(51) Int. Cl.: H01M 14/00

(54) **POLYIMIDE CAPACITANCE BATTERY AND MANUFACTURING METHOD THEREOF**

(30) Priority: 29.04.2011 CN 201110111003
(71) Applicant: Shenzhen Hifuture Electric Co., Ltd., Shenzhen, Guangdong 518118 (CN)
(72) Inventor: LV, Xiaoyi, Shenzhen, Guangdong 518118 (CN); WANG, Qi, Shenzhen, Guangdong 518118 (CN); SANG, Yugui, Shenzhen, Guangdong 518118 (CN); KUANG, Xiaoming, Shenzhen, Guangdong 518118 (CN); REN, Jinsheng, Shenzhen, Guangdong 518118 (CN)
(74) Representative: Dossmann, Gérard
(86) International application number: PCT/CN2011/085136
(87) International publication number: WO 2012/146046

(57) **Abstract**

The present invention specifically relates to a polyimide capacitance battery and a manufacturing method thereof. The polyimide capacitance battery of the present invention is obtained by manufacturing a positive electrode and a negative electrode, and then combining the positive and negative electrodes into the capacitance battery, which consists of the positive electrode, the negative electrode, a polymer membrane therebetween, and an electrolyte, wherein the positive electrode material is a mixture of a lithium-ion insertion compound and a porous carbon material, the negative electrode material is a mixture of modified graphite and a porous activated carbon material, the polymer membrane is a polyimide membrane, and the electrolyte is an electrolyte containing a lithium ion compound and an organic solvent. The polyimide capacitance battery of the present invention can be widely applied in the fields of electric automobile, electric tools, solar energy storage, wind energy storage, portable appliances and the like.

## Description

### Technical field

The present invention belongs to the technical field of capacitors and batteries, and relates to a super capacitor, in particular to a polyimide capacitance battery and a manufacturing method thereof.

### Background of the invention

Super capacitor is a kind of novel electrochemical energy storage device between conventional capacitors and batteries. Compared with conventional capacitors, it has a higher energy density, and its electrostatic capacity can reach the level of up to a thousand Farads to ten thousand Farads; and compared with the batteries, it has a higher power density and an extremely long cycle life. Thus it combines the advantages of conventional capacitors and batteries, and is a chemical power source with wide application prospects. It has the characteristics of high specific capacity, high power, long life, wide operating temperature limit, being maintenance-free and the like.

According to the difference in energy storage principles, supper capacitors can be divided into three categories: electric double layer capacitor (EDLC), Faraday quasi-capacitance super capacitor, and hybrid super capacitor, wherein the electric double layer capacitor realizes the storage of charges and energy mainly utilizing electric double layers formed by the electrode/electrolyte interfacial charge separation; the Faraday quasi-capacitance super capacitor realizes the storage of charges and energy mainly by means of the Faraday "quasi-capacitance" produced by a rapid oxidation-reduction reaction on the electrode surface; and the hybrid super capacitor adopts a non-polarizable electrode (such as nickel hydroxide) of a battery as one electrode, and a polarizing electrode (such as activated carbon) of an electric double layer capacitor as the other electrode, and such hybrid design can greatly improve the energy density of the super capacitor.

According to electrolytes, the super capacitor can be divided into three kinds of super capacitors of inorganic electrolyte, organic electrolyte and polymer electrolyte, wherein in the inorganic electrolyte a high-concentration acidic (such as H₂SO₄) or alkaline (such as KOH) aqueous solution is mainly applied, and a neutral aqueous solution electrolyte is seldom applied therein; the organic electrolyte generally adopts a mixed electrolyte composed of a quaternary ammonium salt or a lithium salt with a high-conductivity organic solvent (such as acetonitrile); and the polymer electrolyte currently only remains in the laboratory stage, with yet no commercial product available.

By adopting an organic electrolyte, the super capacitor can greatly improve the working voltage of the capacitor, and it can be known according to E = 1/2CV² that it offers a great help to improve the energy density of the capacitor. Currently, mature organic super capacitors generally adopt a symmetric structure, i.e. the positive and negative electrodes adopt the same carbon material, and the electrolyte consists of an ammonium salt and a high-conductivity organic solvent (such as acetonitrile); the power density of such capacitor is very high, which can reach 5,000-6,000 W/Kg, but its energy density is relatively low, which can only reach 3-5 Wh/Kg. Thus, in order to further improve the energy density of the organic super capacitor, a hybrid type structural design is developed, i.e. the positive and negative electrodes adopt different active materials. In recent years, research on organic hybrid super capacitors continuously increases, and organic super capacitors such as those adopting activated carbon as positive electrodes and lithium titanate as negative electrodes, and those adopting polythiophene as positive electrodes and lithium titanate as negative electrodes, etc. appear. In the patent with the application number of 200510110461.5, the positive electrode adopts LiMn_{2-X}M_{X}O₄, the negative electrode adopts activated carbon, and the specific energy of the super capacitor can be up to 50 Wh/Kg (calculated based on the total mass of the positive and negative active substances). However, such type of organic hybrid super capacitors have undesirable energy density and power density, poor electrochemical stability and thermal stability, narrow application temperature range, and short capacitor batty cycle life, which can not satisfy the requirements for capacitor batteries; furthermore, current methods for producing capacitors of this type are complicated, and low in working efficiency, and can not satisfy requirements for high performance of the capacitor products and requirements for large-scale production.

### Summary of the invention

In order to overcome the deficiencies of the prior art, the objective of the present invention is to provide a polyimide capacitance battery, which has greatly improved energy density and cycle life, and further widened application fields.

Another objective of the present invention is to provide a manufacturing method of the polyimide capacitance battery, so as to realize higher performance of the capacitance battery.

In order to achieve the above objectives, the technical solution adopted in the present invention is as follows:

A polyimide capacitance battery of an organic system consists of a positive electrode, a negative electrode, a polymer membrane therebetween and an electrolyte, wherein the positive electrode material is a mixture of a lithium-ion insertion compound and a porous carbon material, the negative electrode material is a mixture of modified graphite and a porous activated carbon material, said polymer membrane is a polyimide membrane, and said electrolyte adopts an organic solvent electrolyte containing lithium ions.

The components and their weight percentage of said positive electrode material are:

| | |
|---|---|
| lithium-ion insertion compound | 20%-85% |
| porous carbon material | 5%-70% |
| conductive agent | 5% |
| binder | 5%; |

and the components and their weight percentage of said negative electrode material are:

| | |
|---|---|
| high density modified graphite | 45% |
| porous activated carbon | 45% |
| binder | 5%. |

Said lithium-ion insertion compound is one of or a mixture of more than two of LiCoO₂, LiMn₂O₄, LiFePO₄, LiFeMnPO₄, LiNi_{0.8}Co_{0.2}O₂, and LiNi_{1/3} Co_{1/3} Mn_{1/3}O₂. Lithium ions in these lithium-ion insertion compounds have good insertion/desertion reversibility, rapid diffusion rate, and small volume changes along with the reaction, so that the battery has good cycle performance and large current characteristic.

Said modified graphite is high density modified graphite, with a density≥ 2.2 g/cm³, and includes at least one of or a mixture of more than two of resin carbon and organic polymer pyrolytic carbon, and soft carbon solid phase carbon materials. Such type of high density modified graphite has a high specific capacity of 300-700 mAh/g, and the simultaneous use of the lithium-ion insertion compound and such type of high density modified graphite material does not cause obvious swelling of the structure, so as to achieve good charging/discharging cycle performance.

Said porous carbon should include one of or a mixture of more than two of activated carbon, carbon cloth, carbon fibers, carbon felt, carbon aerogel, and carbon nanotubes.

Said polyimide membrane is a tortuous-pore membrane, with a thickness of 10-30 µm, a pore size of 0.03-0.05 µm, a porosity of 90%-95%, a dielectric constant of 4.0 under 103 Hertz, a decomposition temperature above 400°C, and a material insulation coefficient of 3.4. Adopting such polyimide membrane can effectively solve the safety problem in lithium battery and capacitance battery products caused by the dendrite of lithium ions.

Said electrolyte comprises a lithium ion compound, said lithium ion compound being one of or a mixture of more than two of LiClO₄, LiBF₄, LiPF₆, LiCF₃SO₃, LiN(CF₃SO₂), LiBOB, and LiAsF₆; a phase transfer catalyst, said phase transfer catalyst being one of or a mixture of more than two of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄, and Bu₄PBF₄; and an organic solvent, said organic solvent being one of or a mixture of more than two of ethylene carbonate, propylene carbonate, γ-butyrolactone, dimethyl carbonate, diethyl carbonate, butylene carbonate, methyl ethyl carbonate, methyl propyl carbonate, ethylene sulfite, propylene sulfite, ethyl acetate, and acetonitrile; wherein the molar concentration of lithium ions in said electrolyte is kept at 1 mol/L, and the phase transfer catalyst accounts for 1%-5% of the total weight of the electrolyte. These organic electrolytes containing lithium salts have relatively-high ionic conductivities, and can provide rapid movement channels for the migration of lithium ions in the charging/discharging process, so as to improve the reaction rate; at the same time, in a relatively-wide potential range (0-5 V), these organic electrolytes have the characteristics of very good electrochemical stability, good thermal stability, wide use temperature range and the like, so that the stability of the charging/discharging reaction of the super capacitance battery is greatly improved, which facilitates the improvement of the cycle life of the capacitance battery.

A manufacturing method of the polyimide capacitance battery, comprises the following steps:
(1) manufacturing a positive electrode sheet: a lithium-ion insertion compound, a porous carbon material, a conductive agent, and a binder are mixed firstly, blended into a slurry, then coated on a positive electrode current collector, and dried, rolled, cut, and vacuum dried to manufacture the positive electrode sheet;.
(2) manufacturing a negative electrode sheet: high density modified graphite, a porous carbon material, and a binder are mixed firstly, blended into a slurry, then coated on a negative electrode current collector, and dried, rolled, cut, and vacuum dried to manufacture the negative electrode sheet; and
(3) assembling: the manufactured positive and negative electrode sheets are laminated or wound to form a battery core, and placed into an aluminum-plastic film, an aluminum shell, a plastic shell or a steel shell, and then enclosed, and an electrolyte containing lithium ions in an organic solvent is injected.

In the manufacturing steps of said positive electrode, the lithium-ion insertion compound, the porous carbon material, the conductive agent, and the binder are mixed according to the following weight percentages:

| | |
|---|---|
| lithium-ion insertion compound | 20%-85% |
| porous carbon material | 5%-70% |
| conductive agent | 5% |
| binder | 5%; |

and in the manufacturing steps of said negative electrode, the high density modified graphite, the porous activated carbon, and the binder are mixed according to the following weight percentages:

| | |
|---|---|
| modified graphite | 45% |
| porous activated carbon | 45% |
| binder | 5%. |

Said conductive agent includes one of or a mixture of more than two of natural graphite powder, artificial graphite, carbon black, acetylene black, mesocarbon microspheres, high density modified graphite, petroleum coke, carbon nanotubes, and graphene.

Said binder is one of or a mixture of more than two of polytetrafluoroethylene, polyvinylidene fluoride, hydroxypropyl methylcellulose, sodium carboxymethyl cellulose and styrene-butadiene rubber.

The current collector of said positive electrode sheet is an aluminum foil or an aluminum mesh, and the current collector of said negative electrode sheet is a copper foil or a copper mesh.

Compared with the prior art, the beneficial effects of the present invention lie in that: the present invention utilizes a polyimide material as the membrane material of the capacitance battery, the negative electrode uses the mixed material of a high density and high power modified graphite and a porous carbon material, and the positive electrode uses a porous activated carbon with the cycle life thereof capable of being unlimited as a part of the mixed positive electrode material, and the energy density and the cycle life of the capacitance battery are greatly improved on the premise of keeping the characteristics of high power, long cycle life, no pollution, high safety and being maintenance-free and the like of the capacitance battery, which further widens the application field of capacitor batteries. The specific energy of the polyimide capacitance battery of the present invention can be up to 90 Wh/Kg, the specific power being up to 6,000 W/Kg, and after 15,000 charging/discharging cycles at 50 A, the capacity retention is at 95%. The manufacturing method of the polyimide capacitance battery of the present invention is simple in process, and adopts a relatively-high drying temperature to greatly shorten the manufacturing time, so as to improve the working efficiency. The product of the present invention can be widely applied in fields of electric automobile, electric tools, solar energy storage, wind energy storage, portable appliances and the like.

### Specific embodiments

Specific embodiments are incorporated hereafter to further illustrate the present invention in detail.

A manufacturing method of a polyimide capacitance battery, comprises the following steps of:
(1) manufacturing a positive electrode sheet: a lithium-ion insertion compound, a porous carbon material, a conductive agent, and a binder are mixed firstly, blended into a slurry, then coated on a positive electrode current collector, and dried, rolled, cut, and vacuum dried to manufacture the positive electrode sheet;
(2) manufacturing a negative electrode sheet: modified graphite, a porous carbon material, and a binder are mixed firstly, blended into a slurry, then coated on a negative electrode current collector, and dried, rolled, cut, and vacuum dried to manufacture the negative electrode sheet; and
(3) assembling: the manufactured positive and negative electrode sheets are laminated or wound to form a battery core, and placed into an aluminum-plastic film, an aluminum shell, a plastic shell or a steel shell, and then enclosed, and an electrolyte containing lithium ion in a non-aqueous organic solvent is injected.

The current collector of said positive electrode sheet is an aluminum foil or an aluminum mesh, with a thickness of 20 µm; and the current collector of said negative electrode sheet is a copper foil or a copper mesh, with a thickness of 16 µm.

The temperature of the drying oven in the drying process was set at 110°C -120°C; and the temperature of the vacuum drying oven in the vacuum drying was set at 120°C -130°C.

### Example 1:

Manufacturing the positive electrode sheet: LiMn₂O₄, activated carbon, conductive carbon black, and PVDF were mixed according to a mass ratio of 45% : 45% : 5% : 5% with a total amount of 500 g, blended into a slurry with NMP (N-methylpyrrolidone), then coated on an aluminum foil with a thickness of 20 µm (coating weight increase: 140 g/m²), dried at 110°C, rolled, cut (size: 100*154*0.135 mm), vacuum dried at 130°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 110°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after the capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 50 Wh/Kg, the specific power was 5,000 W/Kg, and after 15,000 charging/discharging cycles at 50 A, the capacity retention was at 90%.

### Example 2

Manufacturing the positive electrode sheet: LiMn₂O₄, activated carbon, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after the capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 25 Wh/Kg, the specific power was 5,200 W/Kg, and after 15,000 charging/discharging cycles at 50 A, the capacity retention was at 90%.

### Example 3

Manufacturing the positive electrode sheet: LiMn₂O₄, activated carbon, conductive carbon black, and PVDF were mixed according to a mass ratio of 85 : 5 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 130°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 50 Wh/Kg, the specific power was 4,000 W/Kg, and after 15,000 charging/discharging cycles at 50 A, the capacity retention was at 90%.

### Example 4 :

Manufacturing the positive electrode sheet: LiCoO₂, porous carbon, conductive carbon black, and PVDF (polyvinylidene fluoride) were mixed according to a mass ratio of 45 : 45 : 5: 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate) /DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 60 Wh/Kg, the specific power was 4,000 W/Kg, and after 15,000 charging/discharging cycles at 50 A, the capacity retention was at 95%.

### Example 5 :

Manufacturing the positive electrode sheet: LiCoO₂, porous carbon, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 31 Wh/Kg, the specific power was 5,200 W/Kg, and after 15,000 charging/discharging cycles at 50 A, the capacity retention was at 95%.

### Example 6 :

Manufacturing the positive electrode sheet: LiCoO₂, porous carbon, conductive carbon black, and PVDF were mixed according to a mass ratio of 85 : 5 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 71 Wh/Kg, the specific power was 5,200 W/Kg, and after 15,000 charging/discharging cycles at 50 A, the capacity retention was at 95%.

### Example 7 :

Manufacturing the positive electrode sheet: LiFeMnPO₄, porous carbon, conductive carbon black, and PVDF were mixed according to a mass ratio of 45 : 45 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 75 Wh/Kg, the specific power was 5,600 W/Kg, and after 15,000 charging/discharging cycles at 50 A, the capacity retention was at 95%.

### Example 8

Manufacturing the positive electrode sheet: LiFeMnPO₄, porous carbon, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 40 Wh/Kg, the specific power was 6,000 W/Kg, and after 15,000 charging/discharging cycles at 50 A, the capacity retention was at 90%.

### Example 9

Manufacturing the positive electrode sheet: LiFeMnPO₄, porous carbon, conductive carbon black, and PVDF were mixed according to a mass ratio of 85 : 5 : 5 : 5 with a total amount of 500 g, blended into a slurry with NMP, then coated on an aluminum foil with a thickness of 20 µm (coating weight increase: 140 g/m²), dried at 120°C, rolled, cut (size: 100*154*0.135 mm), vacuum dried at 120°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 90 Wh/Kg, the specific power was 4,500 W/Kg, and after 15,000 charging/discharging cycles at 50 A, the capacity retention was at 85%.

### Example 10:

Manufacturing the positive electrode sheet: LiFePO₄, porous carbon, conductive carbon black, and PVDF were mixed according to a mass ratio of 45 : 45 : 5: 5 with a total amount of 500 g, blended into a slurry with NMP, then coated on an aluminum foil with a thickness of 20 µm (coating weight increase: 140 g/m²), dried at 110°C, rolled, cut (100*154*0.135 mm), vacuum dried at 130°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 110°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 56 Wh/Kg, the specific power was 4,600 W/Kg, and after 15,000 charging/discharging cycles at 50 A, the capacity retention was at 87%.

### Example 11

Manufacturing the positive electrode sheet: LiFePO₄, porous carbon, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (100*154*0.135 mm), vacuum dried at 130°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.2 V at 30 A, standing for 5 min, and discharging to 2.5 V at 50 A; the specific energy of the capacitance battery was 26 Wh/Kg, the specific power was 5,000 W/Kg, and after 15,000 charging/discharging cycles at 50 A, the capacity retention was at 95%.

### Example 12 :

Manufacturing the positive electrode sheet: LiFePO₄, porous carbon, conductive carbon black, and PVDF were mixed according to a mass ratio of 85 : 5 : 5 : 5 with a total amount of 500 g, blended into a slurry with NMP, then coated on an aluminum foil with a thickness of 20 µm (coating weight increase: 140 g/m²), dried at 110°C, rolled, cut (100*154*0.135 mm), vacuum dried at 130°C for 24 h, and manufactured into the positive electrode sheet.

Manufacturing the negative electrode sheet: high density modified graphite, porous activated carbon and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 110°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of EC (ethylene carbonate)/DEC (diethyl carbonate) of 1 : 1 was injected, so as to assemble a square polyimide super capacitance battery.

Performance test: after a capacitance battery was subjected to the formation (i.e. the activation of capacitance battery Performance), performance test was carried out; the test profile was charging to 4.2 V at 30 A, standing for 5 min, and discharging to 2.5 V at 50 A; the specific energy of the capacitance battery was 65 Wh/Kg, the specific power was 5,000 W/Kg, and after 15,000 charging/discharging cycles at 50 A, the capacity retention was at 91%.

### Example 13 :

Manufacturing the positive electrode sheet: LiNi_{0.8}Co_{0.2}O₂, carbon fibers, conductive carbon black, and PVDF were mixed according to a mass ratio of 45 : 45 : 5 : 5 with a total amount of 500 g, blended into a slurry with NMP, then coated on an aluminum foil with a thickness of 20 µm (coating weight increase: 140 g/m²), dried at 110°C, rolled, cut (100*154*0.135 mm), vacuum dried at 130°C for 24 h, and manufactured into the positive electrode sheet.

Manufacturing the negative electrode sheet: high density modified graphite, carbon nanotubes, and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 110°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiClO₄ concentration of 1 mol/L and a molar concentration ratio of propylene carbonate/acetonitrile of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.0 V at 30 A, standing for 5 min, and discharging to 2.3 V at 50 A; the specific energy of the capacitance battery was 50 Wh/Kg, the specific power was 4,200 W/Kg, and after 15,000 charging/discharging cycles at 50 A, the capacity retention was at 82%.

### Example 14

Manufacturing the positive electrode sheet: LiNi_{0.8}Co_{0.2}O₂, carbon fibers, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (100*154*0.135 mm), vacuum dried at 120°C for 24 h, and manufactured into the positive electrode sheet.

Manufacturing the negative electrode sheet: high density modified graphite, carbon nanotubes, and PVDF were mixed according to a mass ratio of 20 : 70 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of propylene carbonate/acetonitrile of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.0 V at 30 A, standing for 5 min, and discharging to 2.3 V at 50 A; the specific energy of the capacitance battery was 38 Wh/Kg, the specific power was 5,800 W/Kg, and after 15,000 charging/discharging cycles at 50 A, the capacity retention was at 89%.

### Example 15

Manufacturing the positive electrode sheet: LiNi_{0.8}Co_{0.2}O₂, carbon fibers, conductive carbon black, and PVDF were mixed according to a mass ratio of 85 : 5 : 5 : 5 with a total amount of 500 g, blended into a slurry with NMP, then coated on an aluminum foil with a thickness of 20 µm (coating weight increase: 140 g/m²), dried at 120°C, rolled, cut (100*154*0.135 mm), vacuum dried at 120°C for 24 h, and manufactured into the positive electrode sheet.

Manufacturing the negative electrode sheet: high density modified graphite, carbon nanotubes, and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with a LiPF₆ concentration of 1 mol/L and a molar concentration ratio of propylene carbonate/acetonitrile of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.0 V at 30 A, standing for 5 min, and discharging to 2.3 V at 50 A; the specific energy of the capacitance battery was 65 Wh/Kg, the specific power was 4,700 W/Kg, and after 20,000 charging/discharging cycles at 50 A, the capacity retention was at 89%.

### Example 16 :

Manufacturing the positive electrode sheet: LiNi_{1/3} Co_{1/3} Mn_{1/3}O₂, carbon nanotubes, conductive carbon black, and PVDF were mixed according to a mass ratio of 45 : 45 : 5 : 5 with a total amount of 500 g, blended into a slurry with NMP, then coated on an aluminum foil with a thickness of 20 µm (coating weight increase: 140 g/m²), dried at 110°C, rolled, cut (100*154*0.135 mm), vacuum dried at 130°C for 24 h, and manufactured into the positive electrode sheet.

Manufacturing the negative electrode sheet: high density modified graphite, carbon aerogel, and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 110°C, rolled, cut (size: 100*154*0.09 mm²), vacuum dried at 130°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with equal amounts of LiAsF₆/LiBOB and a total lithium ion concentration of 1 mol/L and a molar concentration ratio of γ-butyrolactone/methyl propyl carbonate of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.1 V at 30 A, standing for 5 min, and discharging to 2.2 V at 50 A; the specific energy of the capacitance battery was 50 Wh/Kg, the specific power was 4,200 W/Kg, and after 15,000 charging/discharging cycles at 50 A, the capacity retention was at 82%.

### Example 17

Manufacturing the positive electrode sheet: LiNi_{1/3} Co_{1/3} Mn_{1/3}O₂, carbon nanotubes, conductive carbon black, and PVDF were mixed according to a mass ratio of 20 : 70 : 5 : 5 with a total amount of 500 g, blended into a slurry with NMP, then coated on an aluminum foil with a thickness of 20 µm (coating weight increase: 140 g/m²), dried at 120°C, rolled, cut (100*154*0.135 mm), vacuum dried at 120°C for 24 h, and manufactured into the positive electrode sheet.

Manufacturing the negative electrode sheet: high density modified graphite, carbon aerogel, and PVDF were mixed according to a mass ratio of 20 : 70 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded on an aluminum tab, the negative electrode pole group was welded on a nickel tab, the welded battery core was placed in a formed aluminum-plastic film, and an electrolyte 80 g with equal amounts of LiAsF₆/LiBOB and a lithium ion total concentration of 1 mol/L and a molar concentration ratio of propylene carbonate/acetonitrile of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.1 V at 30 A, standing for 5 min, and discharging to 2.2 V at 50 A; the specific energy of the capacitance battery was 38 Wh/Kg, the specific power was 5,800 W/Kg, and after 15,000 charging/discharging cycles at 50 A, the capacity retention was at 89%.

### Example 18

Manufacturing the positive electrode sheet: LiNi_{1/3} Co_{1/3} Mn_{1/3}O₂, carbon nanotubes, conductive carbon black, and PVDF were mixed according to a mass ratio of 85 : 5 : 5: 5 with a total amount of 500 g, blended into a slurry with NMP, then coated on an aluminum foil with a thickness of 20 µm (coating weight increase: 140 g/m²), dried at 120°C, rolled, cut (100*154*0.135 mm), vacuum dried at 120°C for 24 h, and manufactured into the positive electrode sheet.

Manufacturing the negative electrode sheet: high density modified graphite, carbon aerogel, and PVDF were mixed according to a mass ratio of 45 : 45 : 10 with a total amount of 500 g, blended into a slurry with NMP, then coated on a copper foil with a thickness of 16 µm (coating weight increase: 90 g/m²), dried at 120°C, rolled, cut (size: 100*154*0.09 mm²), vacuum dried at 120°C for 24 h, and manufactured into the negative electrode sheet.

Polyimide was selected as the membrane, the positive electrode sheets (22 pieces), the membrane, and the negative electrode sheets (23 pieces) were laminated into a battery core, then the positive electrode pole group of the laminated battery core was welded onto an aluminum tab, the negative electrode pole group was welded onto a nickel tab, the welded battery core was placed in a formed aluminum-plastic film, and an electrolyte 80 g with equal amounts of LiAsF₆/LiBOB and a lithium ion total concentration of 1 mol/L and a molar concentration ratio of propylene carbonate/acetonitrile of 1 : 1 was injected, so as to assemble a square polyimide super capacitance battery.

Performance test: after a capacitance battery was subjected to the formation (i.e. the activation of capacitance battery performance), performance test was carried out; the test profile was charging to 4.1 V at 30 A, standing for 5 min, and discharging to 2.2 V at 50 A; the specific energy of the capacitance battery was 65 Wh/Kg, the specific power was 4,700 W/Kg, and after 20,000 charging/discharging cycles at 50 A, the capacity retention was at 89%.

The polyimide capacitance battery of the present invention realizes the combination of the principles and techniques of lithium-ion batteries and super capacitors in an electrolytic cell, adopts a polyimide membrane as an insulator, and reasonably combines the lithium-ion insertion/desertion reaction with the quick reversible two-dimensional, quasi-two-dimensional faradic reactions together by the electrochemical calculation and the electrochemical design, so that the specific energy of the high energy capacitance battery is greatly improved while maintaining the characteristics of a super capacitor such as high specific power, long life and quick-charging, which simultaneously has both the performance characteristics of super capacitor and lithium ion battery.

The above examples only are preferred examples of the present invention, which should not be regarded as limitations on the protection scope of the present invention, and non-substantial variations and replacements made by those skilled in the art on the basis of the present invention fall within the protection scope of the present invention.

## Claims

1. A polyimide capacitance battery consisting of a positive electrode, a negative electrode, a polymer membrane therebetween, and an electrolyte, **characterized in that**: the positive electrode material is a mixture of a lithium-ion insertion compound and a porous carbon material, the negative electrode material is a mixture of modified graphite and a porous activated carbon material, the polymer membrane is a polyimide membrane, and the electrolyte is an electrolyte containing a lithium ion compound and an organic solvent.

2. The polyimide capacitance battery according to claim 1, **characterized in that**: said lithium-ion insertion compound is one of or a mixture of more than two of LiCoO₂, LiMn₂O₄, LiFePO₄, LiFeMnPO₄, LiNi_{0.8}Co_{0.2}O₂, and LiNi_{1/3} Co_{1/3} Mn_{1/3}O₂.

3. The polyimide capacitance battery according to claim 1, **characterized in that**: said modified graphite has a density of ≥ 2.2 g/cm³ and is at least one of or a mixture of more than two of resin carbon and organic polymer pyrolytic carbon, and soft carbon solid phase carbon materials.

4. The polyimide capacitance battery according to claim 1, **characterized in that**: said porous carbon material is one of or a mixture of more than two of activated carbon, carbon cloth, carbon fibers, carbon felt, carbon aerogel, and carbon nanotubes.

5. The polyimide capacitance battery according to claim 1, **characterized in that**: said polyimide membrane is a tortuous-pore membrane with a thickness of 10 µm-30 µm, a pore size of 0.03 µm -0.05 µm, and a porosity of 90%-95%.

6. The polyimide capacitance battery according to claim 1, **characterized in that**: said electrolyte contains a lithium ion compound, said lithium ion compound being one of or a mixture of more than two of LiClO₄, LiBF₄, LiPF₆, LiCF₃SO₃, LiN(CF₃SO₂), LiBOB, and LiAsF₆; a phase transfer catalyst, said phase transfer catalyst being one of or a mixture of more than two of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄, and Bu₄PBF₄; and an organic solvent, said organic solvent being one of or a mixture of more than two of ethylene carbonate, propylene carbonate, γ-butyrolactone, dimethyl carbonate, diethyl carbonate, butylene carbonate, methyl ethyl carbonate, methyl propyl carbonate, ethylene sulfite, propylene sulfite, ethyl acetate, and acetonitrile.

7. A manufacturing method of the polyimide capacitance battery according to claim 1, comprising the following steps:
(1) manufacturing a positive electrode sheet: a lithium-ion insertion compound, a porous carbon material, a conductive agent, and a binder are mixed firstly, blended into a slurry, then coated on a positive electrode current collector, and dried, rolled, cut, and vacuum dried to manufacture the positive electrode sheet;
(2) manufacturing a negative electrode sheet: modified graphite, a porous carbon material, and a binder are mixed firstly, blended into a slurry, then coated on a negative electrode current collector, and dried, rolled, cut, and vacuum dried to manufacture the negative electrode sheet; and
(3) assembling: the manufactured positive and negative electrode sheets are laminated or wound to form a battery core, and placed in an aluminum-plastic film, an aluminum shell, a plastic shell or a steel shell, and then enclosed, and an electrolyte containing lithium ions in a non-aqueous organic solvent is injected.

8. The manufacturing method of the polyimide capacitance battery according to claim 7, **characterized in that**: in said step of manufacturing the positive electrode, the lithium-ion insertion compound, the porous carbon material, the conductive agent, and the binder are mixed according to the following weight percentages:
| | |
|---|---|
| lithium-ion insertion compound | 20%-85% |
| porous carbon material | 5%-70% |
| conductive agent | 5% |
| binder | 5%; |
and in said step of manufacturing the negative electrode, the high density modified graphite, the porous activated carbon, and the binder are mixed according to the following weight percentages:
| | |
|---|---|
| high density modified graphite | 45% |
| porous activated carbon | 45% |
| binder | 5%. |

9. The manufacturing method of the polyimide capacitance battery according to claim 7, **characterized in that**: said conductive agent comprises one of or a mixture of more than two of natural graphite powder, artificial graphite, carbon black, acetylene black, mesocarbon microspheres, high density modified graphite, petroleum coke, carbon nanotubes, and graphene; and said binder is one of or a mixture of more than two of polytetrafluoroethylene, polyvinylidene fluoride, hydroxypropyl methylcellulose, sodium carboxymethyl cellulose and styrene-butadiene rubber.

10. The manufacturing method of the polyimide capacitance battery according to claim 7, **characterized in that**: the current collector of said positive electrode sheet is an aluminum foil or an aluminum mesh, and the current collector of said negative electrode sheet is a copper foil or a copper mesh.
